# EUROPEAN PATENT APPLICATION

(11) **EP 2 199 893 A2**
(43) Date of publication of application: **23.06.2010**
(21) Application number: 09173692.6
(22) Date of filing: 21.10.2009
(51) Int. Cl.: G06F 3/048, G06F 3/01

(54) **Method for displaying items and display apparatus applying the same**

(30) Priority: 18.12.2008 KR 20080129413
(71) Applicant: SAMSUNG ELECTRONICS CO., LTD., Suwon-si Gyeonggi-do 442-742 (KR)
(72) Inventor: Hwangbo, Kyoung-nyo, Suwon-si (KR); Yim, Jin-ho, Suwon-si (KR)
(74) Representative: Waddington, Richard

(57) **Abstract**

An item display method and a display apparatus are provided. The item display method includes displaying one or more items along a route set by a move operation in response to the receiving the move operation. Therefore, it is possible for a user to control one or more items to be displayed using an intuitive operation method.

## Description

### BACKGROUND OF THE INVENTION

### 1. Field of the Invention

Apparatuses and methods consistent with the present invention relate to displaying items, and more particularly, to displaying items on a screen according to user operations.

### 2. Description of the Related Art

Display apparatuses are mounted in electronic apparatuses to display screens to provide various functions of electronic apparatuses. In particular, as functions provided by the electronic apparatuses are diversified, the amount of contents which the display apparatuses need to display on the screens increases significantly.

For example, televisions (TVs) display not only broadcasting screens and on-screen-display (OSD) menus but also widgets for showing a variety of information. Additionally, display apparatuses are mounted in MPEG Audio Layer-3 (MP3) players to display menu screens, music files or various photographs on screens.

Various user interfaces through which users enter commands are provided. For example, touch screens or touchpads capable of being touched by users have recently become popular as very intuitive user interfaces.

However, as the number of items that need to be displayed on a screen increases, it becomes difficult for a display apparatus to continue to display the required items on the screen. Additionally, when one or more items are continuously displayed on the screen without any interruptions, a user may think that the one or more items are arranged in a non-intuitive manner.

Accordingly, there is a need for methods that display various items more intuitively.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a method for displaying at least one item along a route set by a move operation if the move operation is received by an operation input unit, and a display apparatus applying the method.

According to an aspect of the present invention, there is provided a display apparatus including a display unit, an operation input unit which receives an operation inputted by a user, and a controller which controls the display unit to display at least one item along a route set by a move operation, if the operation received by the operation input unit is the move operation.

If the operation received by the operation input unit is the move operation, the controller controls the display unit to display a plurality of items at regular intervals along the route set by the move operation.

If the operation received by the operation input unit is the move operation, the controller controls the display unit to display a plurality of items at equal distances along the route set by the move operation.

If the operation received by the operation input unit is the move operation with another operation, the controller may control the display unit to display at least one item along the route set by the move operation.

A number of the at least one item displayed may be determined according to a length of the route set by the move operation.

A display density of the at least one item displayed may be determined according to a speed of the move operation.

If the user selects one item from the at least one displayed item, the controller may control the display unit so that items of the at least one item displayed other than the selected item disappear.

Each of the at least one item may be an icon for executing a predetermined application.

According to another aspect of the present invention, there is provided an item display method including receiving a move operation, and displaying on the display at least one item along a route set by the move operation in response to the receiving the move operation.

The displaying may include displaying the plurality of items at regular intervals along the route set by the move operation.

The displaying may include displaying the plurality of items at equal distances along the route set by the move operation.

The move operation is a stroke operation, the displaying may include displaying the at least one item along a route set by the stroke operation.

The move operation is an operation of moving a pointer of a pointing device, the displaying may include displaying the at least one item along a route set by the operation of moving the pointer.

The move operation is a motion operation from a motion sensor, the displaying may comprise displaying the at least one item along a route set by the motion operation.

The item display method may further include receiving another operation. The displaying may include displaying the at least one item along the route set by the move operation in response to the receiving the another operation and the receiving the move operation.

The item display method may further include receiving an operation of selecting one item from the at least one displayed item, and controlling the display unit so that the at least one displayed item other than the selected item disappear.

Each of the at least one item may be an icon for executing a predetermined application.

A number of the at least one item displayed may be determined according to a length of the route set by the move operation.

A display density of the at least one item displayed may be determined according to a speed of the move operation.

According to another aspect of the present invention, there is provided an item display method including setting an item display route, and if an operation is received from a user, displaying at least one item along the set item display route.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram of a display apparatus according to an exemplary embodiment of the present invention;

FIG. 2 is a flowchart explaining an item display method according to an exemplary embodiment of the present invention;

FIG. 3 is a view explaining a process of displaying items one by one on a touch screen according to an exemplary embodiment of the present invention;

FIG. 4 is a view explaining a process of displaying items at once on a touch screen according to an exemplary embodiment of the present invention;

FIG. 5 is a view explaining a process of displaying widgets on a touch screen according to an exemplary embodiment of the present invention;

FIG. 6 is a view explaining a process of displaying items on a touch screen and selecting one item from the displayed items according to an exemplary embodiment of the present invention;

FIG. 7 is a view explaining a process of displaying items along a route set by a move operation when an operation input unit is a touchpad according to an exemplary embodiment of the present invention;

FIG. 8 is a view explaining a process of displaying items along a route set by a move operation when an operation input unit is a pointing device according to an exemplary embodiment of the present invention; and

FIG. 9 is a view explaining a process of displaying items along a route set by a move operation when an operation input unit receives motion information from a remote control having a motion sensor according to an exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

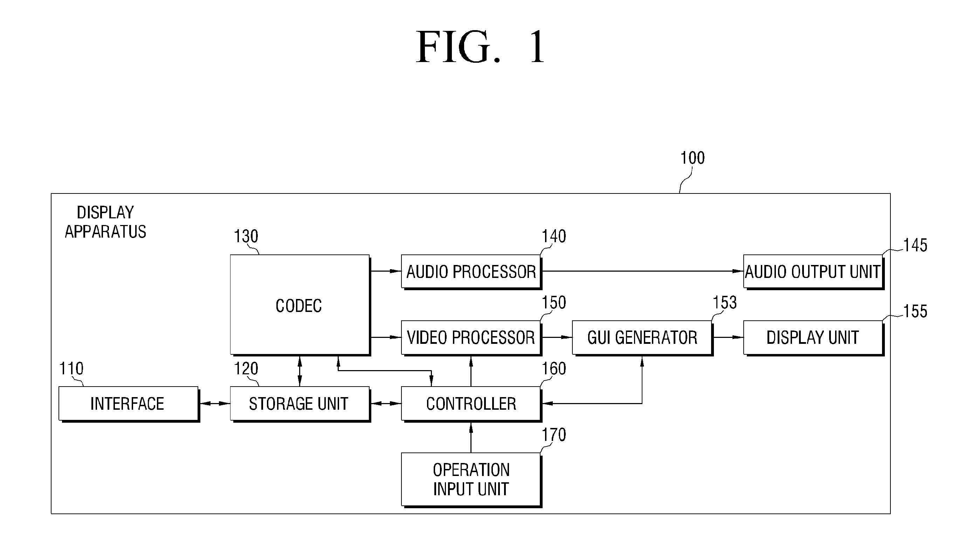

FIG. 1 is a block diagram of a display apparatus 100 according to an exemplary embodiment of the present invention. The elements of the display apparatus 100 may be implemented via hardware and/or software, e.g. via a hardware processor. The display apparatus 100 comprises an interface 110, a storage unit 120, a codec 130, an audio processor 140, an audio output unit 145, a video processor 150, a graphical user interface (GUI) generator 153, a display unit 155, a controller 160 and an operation input unit 170.

The interface 110 connects the display apparatus 100 to an external device. The display apparatus 100 downloads a multimedia file from the external device via the interface 110. Additionally, the display apparatus 100 uploads a multimedia file to the external device via the interface 110.

The storage unit 120 stores a multimedia file, for example a music file, a video file or a text file. Additionally, the storage unit 120 may store an operating program required to operate the display apparatus 100.

The codec 130 encodes or decodes the multimedia file. In more detail, the codec 130 decodes the multimedia file stored in the storage unit 120, and transmits the decoded multimedia file to the audio processor 140 and the video processor 150.

The audio processor 140 processes an audio signal output from the codec 130. For example, the audio processor 140 performs sound processing, noise removing processing, or equalizing processing. Additionally, the audio processor 140 outputs the processed audio to the audio output unit 145.

The audio output unit 145 may output the processed audio output from the audio processor 140 through a speaker or an ear phone connected via an external output terminal.

The video processor 150 performs signal processing, such as video scaling, on a video signal output from the codec 130, and outputs the processed video to the GUI generator 153.

The GUI generator 153 generates a GUI representing an item to be displayed on a display, and adds the generated GUI to the video output from the video processor 150. Herein, the item refers to a small-size image displayed on a screen, which may provide a user with information or may be selected by the user to receive a command. In other words, the item may be an icon for executing a predetermined application, for example an icon for executing a widget application. The item may be, for example, a widget, a menu item, a button item or a list item.

The display unit 155 displays the video with the GUI generated by the GUI generator 153. For example, if a move operation is received by the operation input unit 170, the display unit 155 may display one or more items along a route set by the move operation.

The operation input unit 170 receives operations input by a user, and sends the received operations to the controller 160. For example, the operation input unit 170 may receive a move operation from a user. Herein, the move operation may correspond to movement of user's fingers, user's hands or a pointer from a first position to a second position on a display screen.

The operation input unit 170 may be implemented, for example, as one or more of a touch screen, a touchpad, a pointing device and a motion sensor.

If the operation input unit 170 is implemented as a touch screen or a touchpad, the move operation may be a stroke operation. Herein, the stroke operation corresponds to a user placing his or her finger onto the touch screen or touchpad and then moving the finger on the touch screen or touchpad while touching the touch screen or touchpad. For example, if the user strokes the touch screen or touchpad from a first position to a second position, the operation input unit 170 may provide the controller 160 with information regarding a route set by the stroke operation.

If the operation input unit 170 is implemented as a pointing device capable of detecting a position to which a pointer points, the move operation may be an operation of moving a pointer on a screen. The pointing device may be an apparatus which detects a position on a display screen where a laser point of a laser emitted from a laser pointer appears. Accordingly, the pointing device may recognize movement of the laser point on the display screen to be a move operation. For example, if a user moves the laser point from the first position to the second position, the pointing device may provide the controller 160 with information regarding a route set by the movement of the laser point.

If the operation input unit 170 is implemented as a motion sensor which inputs motion information, the move operation may be a motion operation by which a user moves the motion sensor. For example, if the motion sensor is mounted in a remote control, a user may move the remote control. If the user moves the motion sensor from the first position to the second position, the motion sensor may provide the controller 160 with information regarding a route set by the movement of the motion sensor.

As described above, the operation input unit 170 may receive various types of move operations from a user.

Additionally, the operation input unit 170 may comprise an item display button (not shown). Since the move operation may enable functions other than an item display function, the controller 160 may control a plurality of items to be displayed only when the move operation is received while the item display button is pressed.

The plurality of items are displayed when the move operation is received while the item display button is pressed in the exemplary embodiment of the present invention, but this is merely an example for convenience of description and the present invention is not limited thereto. Accordingly, the present invention is also applicable to instances in which the plurality of items are displayed when an operation other than the move operation is received together with the move operation.

The controller 160 checks user commands based on user operations received through the operation input unit 170, and controls overall operations of the display apparatus 100 according to the user commands.

In more detail, if a move operation is received by the operation input unit 170, the controller 160 controls one or more items to be displayed along a route set by the move operation. The one or more items may be displayed one by one at regular intervals or equal distances during the move operation, under the control of the controller 160.

The controller 160 controls the one or more items to be displayed one by one every predetermined time period during the move operation, and accordingly, a user may predict when an item is displayed. However, if the user performs the move operation slowly, the one or more items may overlap one another.

Additionally, the controller 160 controls the one or more items to be displayed one by one every time the route set by the move operation exceeds a predetermined distance. Accordingly, it is possible to prevent the one or more items from overlapping one another.

The controller 160 controls the number of displayed items to be determined according to the length of the route set by the move operation. For example, when the length of the route is about 1 centimeter (cm), 2 cm or 3 cm, the controller 160 may control a single item, two items or three items to be displayed, respectively.

Additionally, the controller 160 controls a display density of the displayed items which is determined according to a speed of the move operation. For example, the controller 160 may control an item display density to be reduced as the speed of the move operation increases, and control the item display density to be increased as the speed of the move operation decreases.

The controller 160 also controls the display so that a plurality of items are displayed together or at same time along a movement route when the move operation is completed.

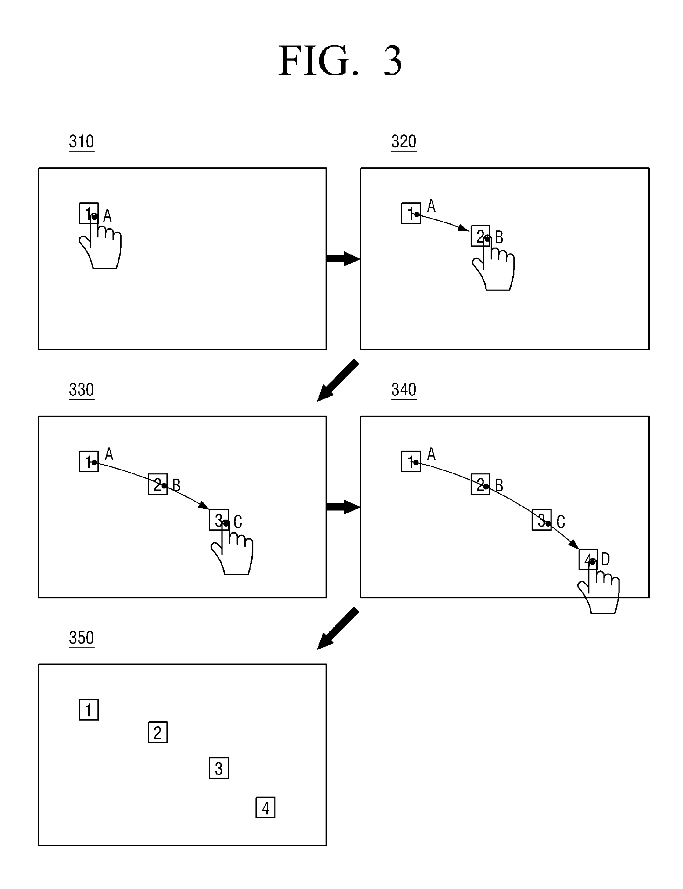

If the operation input unit 170 is a touch screen or touchpad, and if a user strokes the touch screen or touchpad, the controller 160 may control one or more items to be displayed along a route set by the stroke operation. An exemplary process will be described in detail with reference to FIGS. 3 to 7 below.

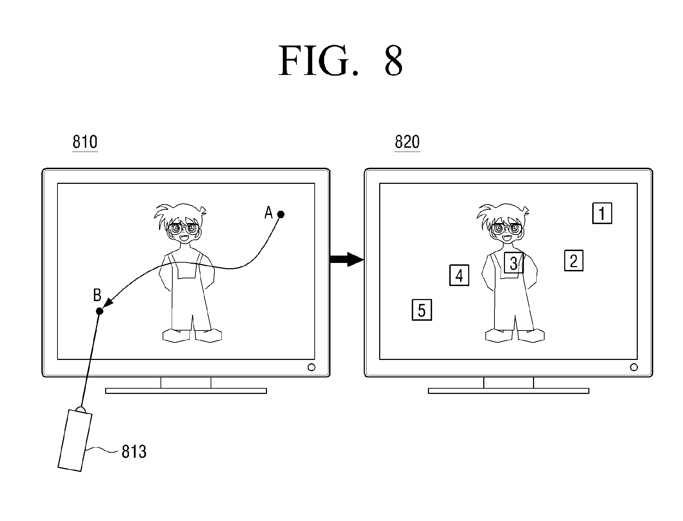

Alternatively, if the operation input unit 170 is a pointing device capable of detecting a position to which a pointer points, and if a user moves the pointer of the pointing device, the controller 160 may control one or more items to be displayed along a movement route of the pointer. An exemplary process will be described in detail with reference to FIG. 8 below.

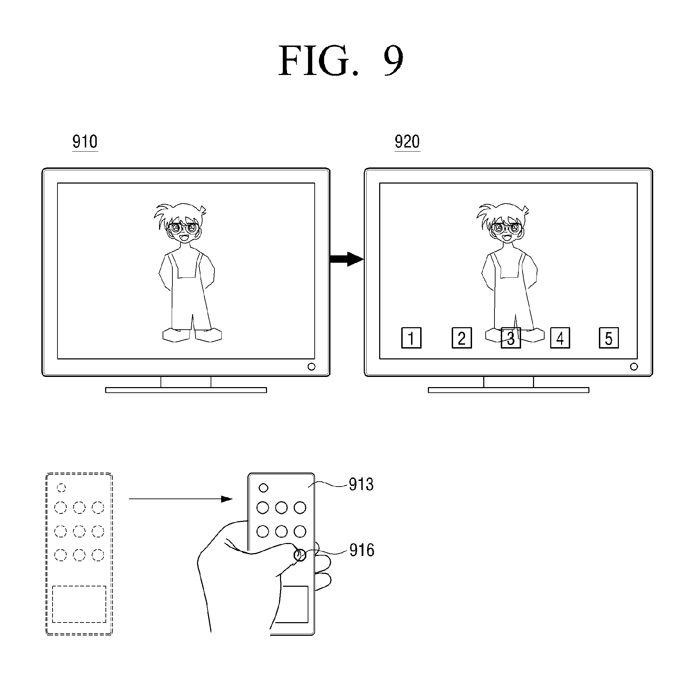

If the operation input unit 170 comprises a motion sensor and the motion information is input from the motion sensor after a user operates the motion sensor, the controller 160 may control one or more items to be displayed along a movement route of the motion sensor. An exemplary process will be described in detail with reference to FIG. 9 below.

If the operation input unit 170 comprises an item display button (not shown), the controller 160 may control one or more items to be displayed only when the move operation is received while the item display button is pressed.

Although the controller 160 controls a plurality of items to be displayed only when the move operation is received while the item display button is pressed in an exemplary embodiment of the present invention, this is merely an example for convenience of description and the present invention is not limited thereto. Accordingly, the present invention is equally applicable to instances in which the controller 160 controls a plurality of items to be displayed when an operation other than the move operation is received together with the move operation.

If a user selects one item from one or more displayed items using the operation input unit 170, the controller 160 controls items other than the selected item to disappear. Accordingly, it is possible for a user to select a desired item so that only the desired item may be displayed on a screen.

As described above, the display apparatus 100 may display one or more items along the route set by the move operation. Therefore, it is possible for a user to more intuitively input a command to display one or more items.

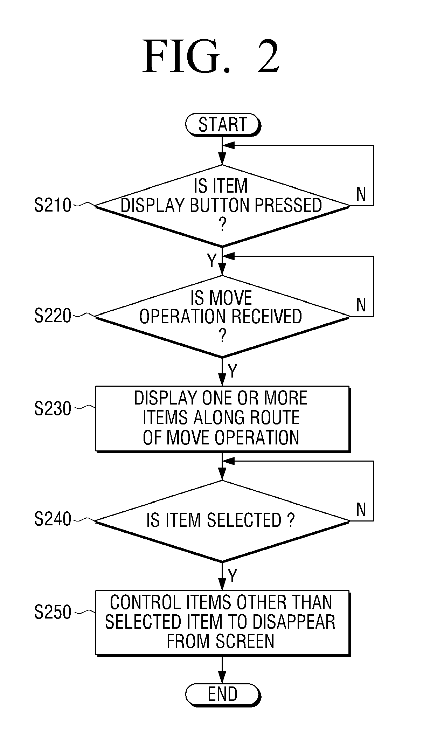

Hereinafter, an item display method is described in detail with reference to FIG. 2. FIG. 2 is a flowchart explaining an item display method according to an exemplary embodiment of the present invention.

The display apparatus 100 determines whether the item display button is pressed (S210). However, this is merely an example for convenience of description and the present invention is not limited thereto. Accordingly, the present invention is also applicable to instances in which the display apparatus 100 determines whether an operation other than the operation of pressing the item display button is received. Alternatively, operation S210 may be omitted.

If it is determined that the display button is not pressed (S210-N) the display apparatus 100 continues to monitor whether the display button is pressed. If it is determined that item display button is pressed (S210-Y), the display apparatus 100 determines whether the move operation is received (S220). Herein, the move operation is an operation in which a user touches a display screen and moves his or her finger from a first position to a second position (namely, a movement of a user's finger), or an operation in which a user moves the motion sensor from the first position to the second position (namely, a movement of a user's hand), or an operation in which a user moves a laser point of a laser omitted from the laser pointer from the first position to the second position (namely, a movement of a position to which the laser pointer points).

For example, if the operation input unit 170 is a touch screen or touchpad, a user may stroke the touch screen or touchpad. Alternatively, if the operation input unit 170 is a pointing device capable of detecting a position to which a pointer points, a user may move the pointer on a screen. Additionally, if the operation input unit 170 comprises a motion sensor, the motion information may be input from the motion sensor after a user moves the motion sensor.

If it is determined that the move operation is received (S220-Y), the display apparatus 100 displays one or more items on the screen along the route set by the move operation (S230). More specifically, the one or more items may be displayed one by one at regular intervals or equal distances during the move operation.

For example, the display apparatus 100 may display each of the one or more items every predetermined period of time during the move operation, and accordingly, a user may predict when an item is displayed. However, if the user performs the move operation slowly, the one or more items may overlap one another.

Additionally, the display apparatus 100 may display each of the one or more items every time the route set by the move operation exceeds a predetermined distance. Accordingly, it is possible to prevent the one or more items from overlapping one another.

Additionally, the display apparatus 100 may display a plurality of items at once along a movement route when the move operation is completed. If the move operation is not received (S220-N), the display apparatus 100 continues to monitor whether the move operation is performed.

If the move operation is performed, the display apparatus 100 determines whether a user selects one item from one or more displayed items using the operation input unit 170 (S240). If it is determined that such an item selection operation is received (S240-Y), the display apparatus 100 controls items other than the selected item to disappear from the screen (S250). Therefore, it is possible for a user to select a desired item so that only the desired item may be displayed. If it is determined that an item is not selected (S240-N), the items along the route continue to be displayed.

The display apparatus 100 may display one or more items along the route set by the move operation through the exemplary processes as described above.

In the exemplary embodiment of the present invention, the display apparatus 100 may be a TV or a monitor, or may be mounted in an MP3 player, a portable multimedia player (PMP) or a mobile phone. Various examples of the display apparatus 100 will be described in detail with reference to FIGS. 3 to 9.

Hereinafter, instances in which the operation input unit 170 is a touch screen is described with reference to FIGS. 3 to 6. FIG. 3 is a view explaining a process of displaying items one by one on a touch screen according to an exemplary embodiment of the present invention.

In FIG. 3, a first image 310 shows a touch screen before a user starts stroking the touch screen from position A. In this instance, an item 1 appears on position A.

A second image 320 shows the user stroking the touch screen from position A to position B. During the stroke operation, an item 2 appears on position B.

A third image 330 shows the user stroking the touch screen from position A to position C. During the stroke operation, an item 3 appears on position C (as explained above, an item 2 is displayed when the movement operation is in position B).

A fourth image 340 shows the user stroking the touch screen from position A to position D. During the stroke operation, an item 4 appears on position D (as explained above, an item 2 and an item 3 are displayed when the movement operation is in positions B and C, respectively).

A fifth image 350 shows the touch screen after the stroke operation is completed. In this instance, the display apparatus 100 displays the four items 1 to 4 on the touch screen.

Therefore, it is possible for the display apparatus 100 to display items one by one at regular intervals or equal distances during the move operation.

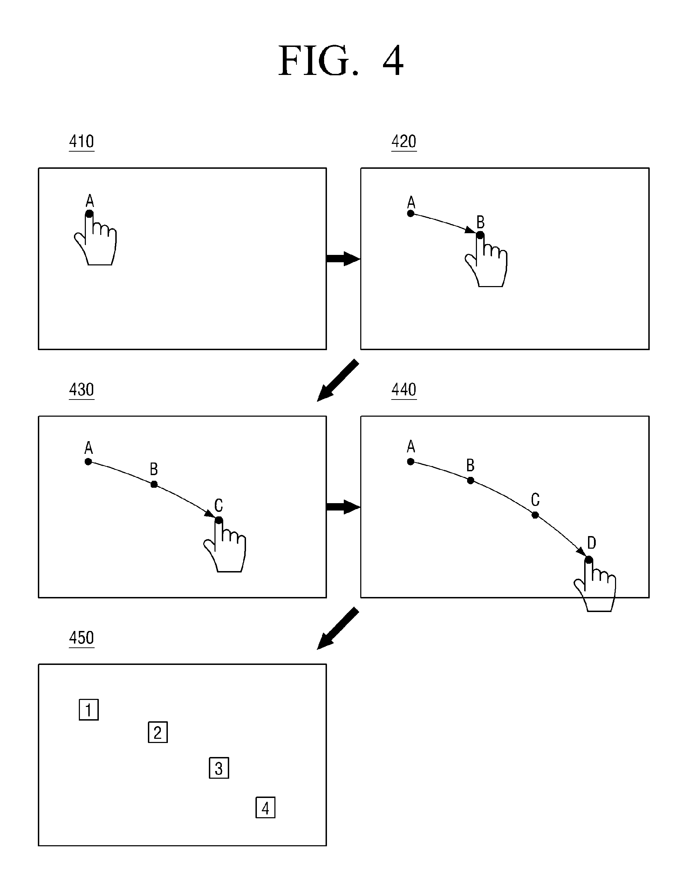

Hereinafter, an example in which a plurality of items are displayed together or at same time is described with reference to FIG. 4. FIG. 4 is a view explaining a process of displaying items together or at same time on a touch screen according to an exemplary embodiment of the present invention.

In FIG. 4, a first image 410 shows the touch screen before a user starts stroking the touch screen from position A. In this instance, no items are displayed even when the stroke operation is started.

A second image 420 shows the user stroking the touch screen from position A to position B. During the stroke operation, no items are displayed.

As shown in a third image 430 and fourth image 440 of FIG. 4, no items are displayed while the user strokes the touch screen from position A to position D.

A fifth image 450 shows the touch screen after the stroke operation is completed. In this instance, the display apparatus 100 displays the four items 1 to 4 on the touch screen together or at the same time along a route set by the stroke operation.

Therefore, it is possible for the display apparatus 100 to display a plurality of items on the touch screen together or at same time after the stroke operation is completed.

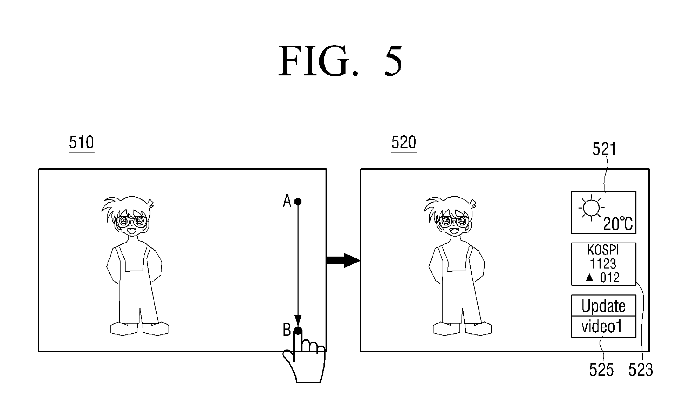

Hereinafter, an example in which widgets are used as items is described with reference to FIG. 5. FIG. 5 is a view explaining a process of displaying widgets on a touch screen according to an exemplary embodiment of the present invention.

In FIG. 5, a first image 510 shows a user stroking the touch screen from position A to position B. A second image 520 shows a weather widget 521, a stock market widget 523 and an update widget 525 which are displayed on the touch screen. Herein, widgets refer to image items which have small size and display predetermined information. For example, the weather widget 521 shows a weather report, the stock market widget 523 shows stock market information, and the update widget 525 shows updated information.

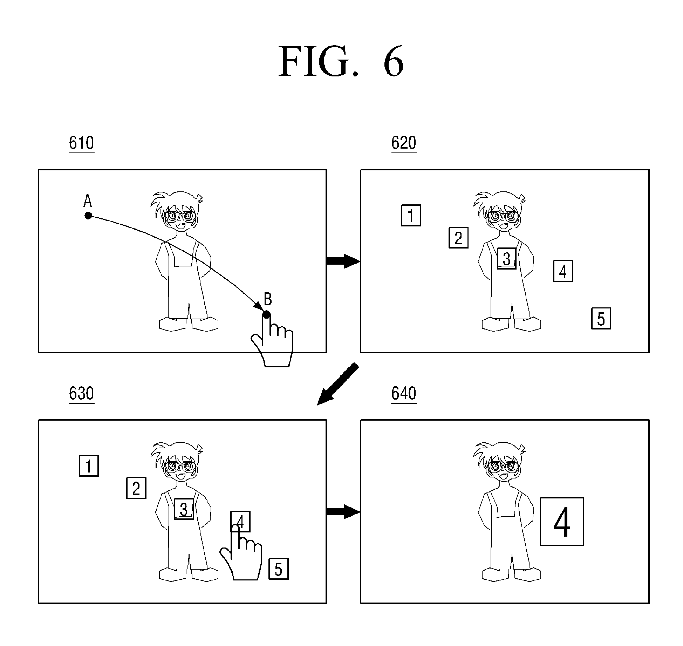

Hereinafter, an example in which a user selects one item is described with reference to FIG. 6. FIG. 6 is a view explaining a process of displaying items on a touch screen and selecting one item from the displayed items according to an exemplary embodiment of the present invention.

In FIG. 6, a first image 610 shows a user stroking the touch screen from position A to position B. After the stroke operation, items 1 to 5 are displayed on the touch screen along a route set by the stroke operation, as shown in a second image 620.

A third image 630 shows the user touching the touch screen to select item 4 from the displayed items 1 to 5. Accordingly, items 1, 2, 3 and 5 disappear from the touch screen, and item 4 selected by the user is magnified and displayed, as shown in a fourth image 640.

Therefore, it is possible for the display apparatus 100 to display a plurality of items according to the stroke operation by the user, so that the user may select a desired item from the plurality of displayed items.

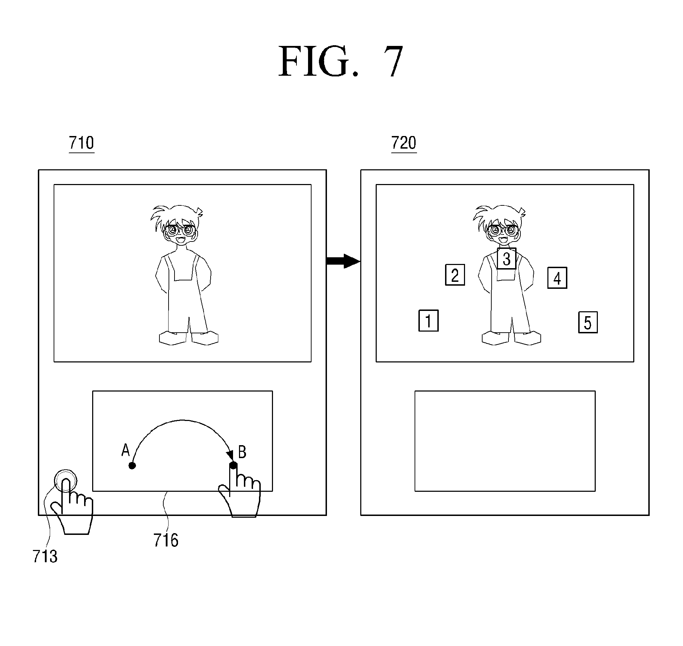

Hereinafter, an example in which items are displayed using a touchpad is described with reference to FIG. 7. FIG. 7 is a view explaining a process of displaying items when the operation input unit 170 is a touchpad 716 according to an exemplary embodiment of the present invention.

In FIG. 7, a first image 710 shows a user stroking the touchpad 716 from position A to position B while pressing an item display button 713. Since a touchpad is generally able to move a cursor on a screen, the display apparatus 100 may display a plurality of items on the screen along a route set by the stroke operation on the touchpad 716 only when the item display button 713 is pressed.

A second image 720 shows five items displayed along the route set by the stroke operation. Therefore, it is possible to display the plurality of items on the screen according to the stroke operation on the touchpad 716 provided by the user.

Hereinafter, an example in which the operation input unit 170 is a pointing device is described with reference to FIG. 8. FIG. 8 is a view explaining a process of displaying items along a route set by a move operation when the operation input unit 170 is a pointing device according to an exemplary embodiment of the present invention.

In FIG. 8, a first image 810 shows a user moving a laser point emitted from a laser pointer 813 from position A to position B. A second image 820 shows five items displayed along a route set by a movement of the laser pointer 813.

Accordingly, it is possible to display the plurality of items according to the movement of the laser point emitted from the laser pointer 813.

Hereinafter, an example in which the operation input unit 170 receives motion information from a remote control 913 having a motion sensor is described with reference to FIG. 9. FIG. 9 is a view explaining a process of displaying items along a route set by a move operation when the operation input unit 170 receives the motion information from the remote control 913 having the motion sensor according to an exemplary embodiment of the present invention.

In FIG. 9, a first image 910 is initially displayed on a screen while a user moves the remote control 913 from left to right when an item display button 916 is being pressed. The motion sensor may be mounted in the remote control 913.

Additionally, since it is easy to move the remote control 913, the user needs to press the item display button 916 before moving the remote control 913 in order to display items on a screen.

When the user moves the remote control 913 from left to right, items 1 to 5 are sequentially displayed on the bottom of the screen along a route set by a movement of the remote control 913 as shown in the second image 920.

Therefore, it is possible to display the plurality of items according to the movement of the remote control 913.

While the move operation is received from the user in the exemplary embodiment of the present invention, the present invention is not limited thereto. Accordingly, the present invention is also applicable to displaying a plurality of items along routes other than the route set by the move operation received from the user.

In this instance, an item display route may be set, and then one or more items may be displayed along the item display route according to an operation received from a user. For example, if a user selects the item display route rather than inputting a move operation, a plurality of items may be displayed along the selected item display route.

As described above, exemplary embodiments provide a method for displaying one or more items along a route set by a move operation, and a display apparatus applying the method. Therefore, it is possible for the display apparatus to display one or more items on a screen using a more intuitive operation method.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit;
an operation input unit which receives an operation input by a user; and
a controller which controls the display unit to display one or more items along a route set by a move operation, if the operation received by the operation input unit is the move operation.

2. The display apparatus as claimed in claim 1, wherein the controller controls the display unit to display a plurality items at regular intervals along the route set by the move operation.

3. The display apparatus as claimed in claim 1, wherein the controller controls the display unit to display a plurality of items at regular distances along the route set by the move operation.

4. The display apparatus as claimed in any one of claims 1 to 3, wherein if the operation received by the operation input unit is the move operation with another operation, the controller controls the display unit to display the one or more items along the route set by the move operation.

5. The display apparatus as claimed in any one of claims 1 to 4, wherein a number of the at least one item displayed is determined according to a length of the route set by the move operation.

6. The display apparatus as claimed in any one of claims 1 to 5, wherein a display density of the at least one item displayed is determined according to a speed of the move operation.

7. The display apparatus as claimed in any one of claims 1 to 6, wherein if the user selects one item from the one or more displayed items, the controller controls the display unit so that items of other than a selected item to disappear.

8. The display apparatus as claimed in any one of claims 1 to 7, wherein each of the one or more items is an icon for executing a predetermined application.

9. An item display method comprising:
receiving a move operation; and
displaying on the display unit at least one item along a route set by the move operation in response to the receiving the move operation.

10. The item display method as claimed in claim 9, wherein the displaying comprises displaying a plurality of items at regular intervals along the route set by the move operation.

11. The item display method as claimed in claim 9, wherein the displaying comprises displaying a plurality of items at equal distances along the route set by the move operation.

12. The item display method as claimed in any one of claims 9 to 11, wherein the move operation is a stroke operation performed on a touch screen or touchpad, the displaying comprises displaying the at least one item along a route set by the stroke operation.

13. The item display method as claimed in any one of claims 9 to 12, wherein the move operation is an operation of moving a pointer of a pointing device, the displaying comprises displaying the at least one item along a route set by the operation of moving the pointer.

14. The item display method as claimed in any one of claims 9 to 13, wherein the move operation is a motion operation from a motion sensor, displaying the one or more items along a route set by the motion operation.

15. The item display method as claimed in any one of claims 9 to 14, further comprising:
receiving another operation,
wherein the displaying comprises displaying the at least one item along the route set by the move operation in response to the receiving the another operation and the receiving the move operation.
